## Europäisches Patentamt

## European Patent Office

## Office européen des brevets

(19)

(11) Veröffentlichungsnummer: **0 160 733**
**B1**

(12) **EUROPÄISCHE PATENTSCHRIFT**

(45) Veröffentlichungstag der Patentschrift:
**05.10.88**

(21) Anmeldenummer: **84108637.4**

(22) Anmeldetag: **21.07.84**

(51) Int. Cl.⁴: **A 47 B 88/00,** F 16 B 12/20

(54) **Ausziehbarer Möbelschub.**

(30) Priorität: **05.05.84 DE 3416627**

(43) Veröffentlichungstag der Anmeldung:
**13.11.85 Patentblatt 85/46**

(45) Bekanntmachung des Hinweises auf die Patenterteilung:
**05.10.88 Patentblatt 88/40**

(84) Benannte Vertragsstaaten:
**AT BE CH FR GB IT LI LU NL SE**

(56) Entgegenhaltungen:
**DE - A - 2 759 349**
**DE - U - 1 916 977**
**DE - U - 7 880 096**
**FR - A - 2 360 006**
**FR - A - 2 373 990**
**FR - A - 2 499 643**
**FR - A - 2 506 143**

(73) Patentinhaber: **DÜPREE, Hans-Werner, Osnabrücker Landstrasse 154, D-4830 Gütersloh 11 (DE)**

(72) Erfinder: **DÜPREE, Hans-Werner, Osnabrücker Landstrasse 154, D-4830 Gütersloh 11 (DE)**

(74) Vertreter: **Meldau, Gustav, Dipl.-Ing. et al, Vennstrasse 9 Postfach 2452, D-4830 Gütersloh 1 (DE)**

## Beschreibung

Die Erfindung liegt auf dem Gebiet der ausziehbaren Möbelschübe und betrifft einen solchen Möbelschub mit angebrachter Frontblende, die in der Ebene ihrer Haupterstreckungsrichtungen mindestens in einer Richtung einstellbar und feststellbar ist, und mittels Verbindungsbeschlägen mit Hintergreifungsköpfen angebracht ist.

Bekannte Verbindungsbeschläge der gattungsgemässen Art sind in Form einer Schwalbenschwanzführung ausgebildet, wobei die Schwalbenschwanznute mindest an einem Ende mit einer Einführungsöffnung für die Schwalbenschwanzleiste versehen ist. Bei diesen Beschlägen sind Nute und Leiste senkrecht zum Boden des Schubes angeordnet, die Blende ist gegenüber dem Schub senkrecht verstellbar und einstellbar. Sind diese bekannten Beschläge derart ausgebildet, dass die Schwalbenschwanzleiste im Querschnitt aus einem Hals besteht, an der ein verbreiterter Kopf sitzt und ist die Nute derart ausgebildet, dass sie einen Durchtrittsschlitz für den Kopf aufweist der breiter ist als der Hals, jedoch schmaler als der Kopf, so ist die Blende gegenüber dem Schub nicht nur in senkrechter, sondern auch in waagrechter Richtung verstellbar und einstellbar. Die eingestellte Lage der Blende gegenüber der Schublade wird mittels einer Klemm- oder Sperrschraube, die von der Seite oder von unten her angreift, festgelegt.

Es sind auch schon Möbelschübe der gattungsgemässen Art bekannt, bei denen ausserhalb der Seitenwände der Schublade je eine senkrecht stehende Exzenterscheibe drehbar angeordnet ist, in die ein an einem biegsamen Stiel sitzender Kopf eingreift, der wiederum an der Rückseite der Frontblende befestigt ist. Dabei wird die Einstellbewegung der Frontblende gegenüber der Schublade in senkrechter und waagrechter Richtung durch ein Verbiegen des Stiels zwischen Frontblende und Kopf erlaubt (FR-A 2 506 143).

Die Erfindung hat sich die Aufgabe gestellt einen Möbelschub mit Verbindungsbeschlag der gattungsgemässen Art zu verbessern, damit er auch in der Lage ist wesentlich grössere Kräfte, insbesondere Zugkräfte aufzunehmen, als bisher bekannte derartige Beschläge, wobei der Beschlag neben dem Frontteil des Schubes bzw. ausserhalb seiner Vorderwand angeordnet ist und für jede Verschiebe- und Einstellrichtung eine besondere Führung aufweist.

Zur Lösung dieser Aufgabe ist ein ausziehbarer Möbelschub der gattungsgemässen Art gekennzeichnet durch die im Anspruch 1 angegebenen Merkmale.

Die Klammern bzw. die Köpfe mit ihren Stegen können bei diesem Möbelbeschlag neben den Seitenwandungen des Schubes bzw. in dem Zwischenraum zwischen doppelten Seitenwandungen des Schubes angeordnet sein, wobei die Möglichkeit besteht den Beschlag derart auszubilden, dass er die gesamte Höhe der Seitenwandungen einnimmt und damit eine umfangreiche Verbindungsfläche aufweist, so dass die zu übertragenden Kräfte weit verteilt sind und die Flächenbelastung gering ist. Beschläge nach der Erfindung können auch unterhalb des Bodens des Schubes angeordnet sein – dabei sind durch entsprechend weite Ausbildung des Beschlages die gleichen Vorteile der geringen Flächenbelastung gegeben.

Beim Möbelschub nach der Erfindung erlaubt der Beschlag ein einfaches und leichtes Anbringen der Frontblende. Die Frontblende ist lediglich derart an den Möbelschub anzusetzen, dass die an den Stegen sitzenden verbreiterten Köpfe vor den Einführungsschlitzen der Klammern liegen und dann gegen den Möbelschub anzudrücken, so dass die Köpfe unter Spreizen der Klammern durch die Schlitze in die Klammern hineinrutschen. Die Frontblende wird in dieser Lage gegen die Vorderfläche des Möbelschubes anliegend klemmend gehalten und kann in Richtung der Einführungsschlitze verschoben und eingestellt werden. Nach dem Einstellen werden durch Betätigung des Sperrgliedes die Backen der Klammern zusammengepresst, dadurch werden die verbreiterten Köpfe angezogen und damit die Frontblende gegen die Vorderseite des Möbelschubes fest und unverrückbar angezogen. Die Verschiebebewegung der Blende in Richtung auf den Schub erfolgt durch Abgleiten des verbreiterten Kopfes auf den unter Klammerspannung stehenden, zusammenstrebenden Schrägflächen.

Merkmale besonderer Ausführungsarten der Erfindung sind aus den abhängigen Ansprüchen ersichtlich.

Aus im wesentlichen funktionellen Gründen ist es lediglich erforderlich, dass Schrägflächen entweder an den Klammern oder an der rückwärtigen Seite der Köpfe angeordnet sind. Bei einer optimalen Ausführung sind Schrägflächen, aufeinander gleitend, sowohl an den Köpfen als auch an den Klammern angeordnet. Solche Schrägflächen können dann auch derart ausgebildet sein, dass sie mit einem eingeprägten Raster versehen sind, um die Reibung bei Justierverstellung zu verbessern und die Justierstellung bis zum Wirksamwerden des Sperrgliedes einhalten.

Durch Ausbilden der Frontseiten der Köpfe als Keil und/oder Ausbilden von auseinanderstrebenden Flächen vor den Einführungsschlitz der Klammerbacken wird das Einsetzen und Eindrücken der Köpfe in die Klammern gegen deren federnde Klemmwirkung erleichtert.

Eine Verschiebung und Justierung der Blende in einer Richtung die rechtwinkelig zu den Klammern bzw. deren Einführungsschlitz liegt, wird erreicht durch eine im Abstand von den Köpfen und Klammern getrennt liegende Verbindung in Form einer Schiebeführung, die vorteilhaft als Schwalbenschwanzführung mit einander hintergreifenden Schrägflächen ausgebildet ist. Der Hals des Beschlagteils, an dem der Kopf sitzt, ist zweckmässig über eine derartige Schiebeführung mit der Blende verbunden, jedoch kann auch die Klammer mittels einer solchen Schiebeführung mit ihrem Basisteil verbunden sein, insbesondere dann, wenn die Klammer an der Blende angeordnet ist und der Kopf mit Hals an dem Schub. Die Schieberichtung der Schiebeführung liegt rechtwinkelig zum Einführungsschlitz der Klammer und durch die Zugwirkung, die beim Einziehen des Kopfes in die Klammer entsteht, insbesondere beim Anziehen des Sperrgliedes an der Klammer werden die Schrägflächen der Schwalbenschwanzführung ineinander verkeilt und festgesetzt. Um die Justierung der Blende in Richtung der Schiebeführung zu erleichtern und zu erhalten, sind auf mindestens einem Paar der aufeinanderliegenden Flächen der Schiebeführung Rasterungen angeordnet, vorzugsweise Linienraster, deren Linien quer zur Schieberichtung ausgerichtet sind.

Hauptsächlich sind die Beschlagteile in dem Zwischenraum zwischen innerer und äusserer Seitenwandung – bei doppelwandigen Schüben – angeordnet. Sie sind schlank und beanspruchen wenig Raum in Querrichtung, so dass dieser Zwischenraum, der auch zur Aufnahme der Schubführung dient, die nutzbare Schubladenbreite nur wenig verringert. Um eine noch geringere Breite zu erreichen, kann eine der Klammerbacken, vorzugsweise die jeweils innere, an die Aussenfläche der inneren Seitenwand des Schubes angeformt sein. Die federnde Klammerwirkung wird dann von der anderen Klammerbacke übernommen. Diese Ausführungsform ist auch dann besonders vorteilhaft, wenn dieser Beschlag in Verbindung mit Schüben verwendet wird, die keine doppelten Seitenwände aufweisen.

Bei Ausbildung des Sperrgliedes der Klammer in Form einer Schraube, die die Klammerbacken quer durchsetzt, ist es möglich diese Schraube von der Seite des Schubes her zu betätigen und zwar derart feinfühlig, dass die Blende mit einer erwünschten Anzugskraft gegen die Frontseite des Schubes anliegt. Es kann beispielsweise ein an der Oberkante der Frontseite des Schubes nach aussen stehender Flansch als obere Anlage der Blende eine leichte Durchbiegung nach aussen aufweisen, so dass er durch die Anzugskraft der Klammern unter der Wirkung der angezogenen Schraube unter Ein- und damit Geradebiegung über seine gesamte Länge fest gegen die innere Blendenfläche anliegt.

Die Erfindung wird anhand von Ausführungsbeispielen mit Bezug auf die Zeichnungen nachstehend näher erläutert. In den Zeichnungen zeigen

Fig. 1 einen Schub in perspektivischer Ansicht als Übersicht.

Fig. 2 eine Klammer in der Seitenansicht.

Fig. 3 ein Beschlagteil aus Hals und Kopf bestehend in der Seitenansicht.

Fig. 4 eine Schiebeführung in der Seitenansicht.

Fig. 5 eine Klammer in der Draufsicht.

Fig. 6 ein Beschlagteil mit Hals und Kopf in der Draufsicht.

Fig. 7 eine Schiebeführung in der Frontsicht.

Fig. 8 Abschnitt einer vorderen Ecke eines Schubes mit angebrachter Blende mit einem Beschlagteil der Erfindung.

Fig. 9 eine andere Ausführungsform eines Beschlages entsprechend der Fig. 8.

Fig. 10 eine weitere Ausführungsform eines Beschlages entsprechend der Fig. 8.

Fig. 11 eine wieder andere Ausführungsform eines Beschlages entsprechend der Fig. 8.

Fig. 12 einen Teil eines Beschlages nach der Erfindung in einer weiteren Ausführungsform.

Fig. 13 einen Teil eines Beschlages entsprechend Fig. 12 in einer abgewandelten Ausführungsform.

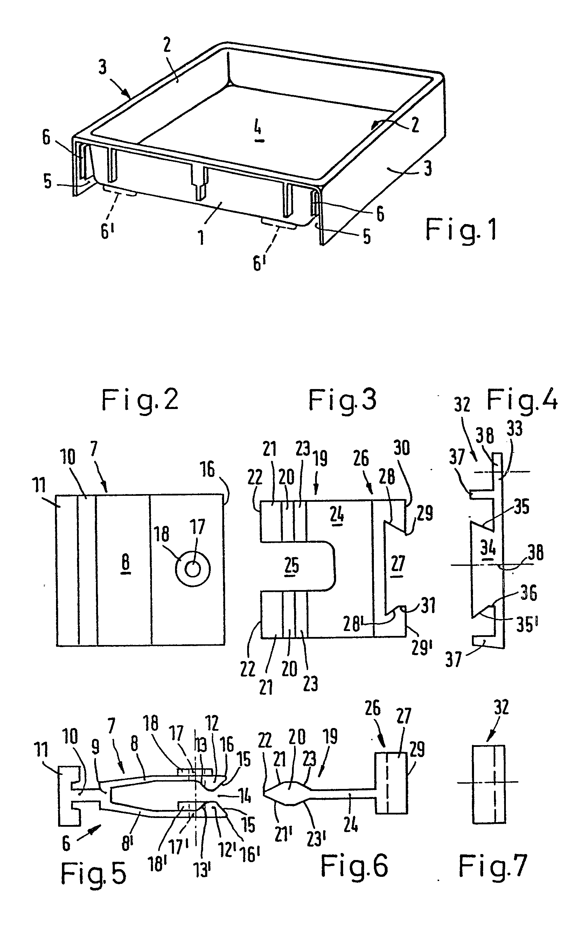

Die in Fig. 1 dargestellte Schublade besteht aus Kunststoff. Sie weist eine durchgehende und nicht durchbrochene Vorderwand 1 auf sowie doppelte Seitenwände mit einer inneren, glatt durchgehenden Seitenwand 2 und einer äusseren, glatt durchgehenden Seitenwand 3 auf beiden Seiten und einem Boden 4. In dem Zwischenraum 5 zwischen den beiden Seitenwänden 2 und 3 ist im unteren Bereich die Schubladenführung sowie ihre Halterung angeordnet. An der Frontseite befindet sich in dem Zwischenraum 5 der Beschlag 6 nach der Erfindung, an dem die hier der Übersicht halber nicht dargestellte Frontblende mit ihrem Beschlagteil anzubringen ist. Anstatt die beiden Beschlagteile 6 in dem Zwischenraum zwischen den inneren und äusseren Seitenwandungen 2 und 3 anzubringen ist es auch möglich diese Beschläge 6' unterhalb des Schubladenbodens 4 und unterhalb der Frontwand 1 anzubringen, wie das mit gestrichelten Linien in der Fig. 1 dargestellt ist. Ein Beschlag nach der Erfindung wird anhand der Figuren 2–7 näher erläutert. Er besteht aus einer Klammer 7 mit zwei Klammerbacken 8, 8', die an ihrem Fusspunkt durch einen Quersteg 9 miteinander verbunden sind. An den Quersteg 9 ist ein Haltesteg 10 angeformt, der wiederum mit einem Einsetzfuss 11 verbunden ist.

An dem offenen Ende der Klammer 7 sind an die Backen 8, 8' nach innen gerichtete Vorsprünge 12, 12' angeformt. Diese Vorsprünge sind zum Inneren der Klammer hin mit Schrägflächen 13 und 13' versehen, die auseinanderstrebend geneigt sind. Zwischen den Vorsprüngen 12, 12' befindet sich ein Einführungsschlitz 14 und von dem Scheitelpunkt der Vorsprünge 12, 12' bis zur äusseren Frontkante der Klammerbacken 8, 8' verlaufen auseinanderstrebende Schrägflächen 15, 15'.

In der Mitte der Klammer ist in geringem Abstand von ihren Vorderkanten 16, 16' in beiden Klammerbacken 8, 8' ein Durchgangsloch 17 angeordnet, dessen Umgebung mit einer Materialverstärkung 18 versehen ist. Zweckmässig ist eines der beiden Löcher 17 in eine der Klammerbacken 8 oder 8' mit einem Innengewinde versehen für eine das Loch durchdringende, hier nicht dargestellte Schraube als Sperrglied. Diese Schraube liegt mit ihrem Kopf beispielsweise auf der Aussenfläche der Klammerbacke 8' auf, durchdringt das Loch 17' in dieser Klammerbakke und ist in das Innengewinde des Loches 17 in der gegenüberliegenden Klammerbacke 8 eingeführt. Es ist erkennbar, dass mit Hilfe dieser Schraube die beiden Klammerbacken 8 und 8' zusammengezogen werden können.

Ein weiterer Beschlagteil entsprechend den Fig. 3 und 6, hier als Einsatzteil 19 bezeichnet, weist einen verbreiterten Kopf 20 auf mit äusseren, keilförmig verlaufenden,auseinanderstrebenden Schrägflächen 21, 21', die von der Vorderkante 22 ausgehen, die einen Grat bildet. An der Rückseite des Kopfes 20 sind ebenfalls Schrägflächen 23, 23' ausgebildet, die von dem breitesten Teil des Kopfes ausgehend auf beiden Seiten im gleichen Winkel zusammenlaufen, bis zu einem Hals 24, der nur einen Bruchteil der Breite des Kopfes 20 aufweist. Der Beschlagteil 19 hat etwa die selbe Höhe wie die Klammer 7. Entsprechend der Lochung 17 mit der sie umgebenden Materialverstärkung 18 in den Klammerbacken 8 und 8' ist der Beschlagteil 19 im Bereich des Kopfes 20 und einem Teil des dahinterliegenden Steges 24 unterteilt unter Offenlassung eines Zwischenraumes 25, der in seiner Weite grösser ist als der Durchmesser der Verstärkung 18 um das Loch 17 herum.

Dem Kopf 20 gegenüberliegend geht der Steg 24 in ein Fussteil 26 über. Dieses Fussteil 26 hat rechteckigen Grundriss und bildet die eine Hälfte einer Schiebeführung, die als Schwalbenschwanzführung ausgebildet ist. In dem Fussteil 26 ist eine Schwalbenschwanznut 27 eingeformt, die von zusammenlaufenden Schrägflächen 28, 28' begrenzt ist. Die Schrägfläche 28 endet an einer scharfen Kante 29, an die sich die Aufstandebene 30 des Beschlages anschliesst. Die Schrägfläche 28' geht mit einem stumpfen Winkel in eine kurze Fläche 31 über, die rechtwinkelig zu der daran anschliessenden Aufstandfläche 29' übergeht, wobei die Aufstandflächen 29 und 29' in gleicher Ebene liegen. Durch die unterschiedliche Ausführung der Schrägflächen 28, 35 einerseits und 28', 35' mit 31 und 35 ist gewährleistet, dass das Zusammensetzen der Schwalbenschwanzführung nur unverwechselbar erfolgt.

Der andere Teil 32 der Schiebeführung besteht aus einer Montageplatte 33, auf der die Schwalbenschwanzleiste 34 sitzt. An den Seiten dieser Schwalbenschwanzleiste 34 sind Schrägflächen 35, 35' ausgebildet, die in ihrer Winkelstellung den Schrägflächen 28, 28' der Schwalbenschwanznut 27 entsprechen. Der Übergangswinkel von der Schrägfläche 35 der Schwalbenschwanznut 34 zu der Montageplatte 33 ist spitz ausgebildet, der Übergangswinkel von der Schrägfläche 35' der Schwalbenschwanzleiste 34 geht zunächst in eine kurze Fläche 36 über, die rechtwinkelig zu der Montageplatte 33 angeordnet ist.

Ausserhalb der Schwalbenschwanzleiste 34 sind noch rechtwinkelig von der Montageplatte 33 abstehende Stege 37, 37' ausgebildet, die zur Begrenzung und insbesondere Abdeckung der Schrägflächen 35, 35' dienen und die Aussenflächen des Fusses 26 des Beschlagteils 19 nach dem Einsetzen übergreifen. In dem Beschlagteil 32 sind mindestens zwei Durchgangslöcher 38 angeordnet, die die Montageplatte 33 durchdringen und zur Aufnahme von Befestigungsschrauben dienen. Die Durchgangslöcher 38 sind in üblicher Weise hier durch Strich-Punkte angedeutet, die Schrauben sind der Übersichtlichkeit halber nicht gezeichnet. Mit den in die Durchgangslöcher 38 eingesetzten Schrauben wird der Beschlagteil 32 auf der Rückseite der Blende des Schubes befestigt.

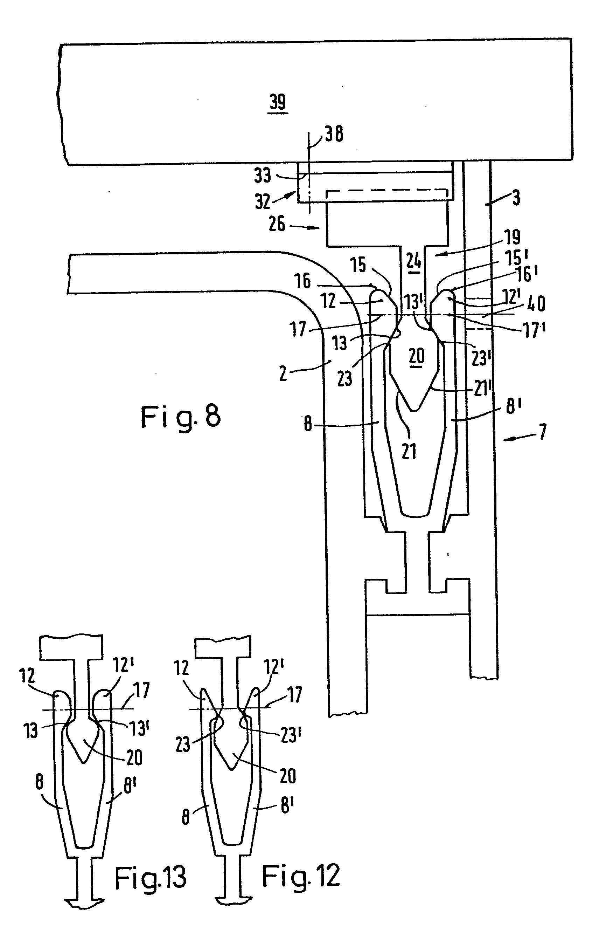

In der Fig. 8 ist eine vordere Ecke einer Schublade mit angebrachter Blende in der Draufsicht (oder Unteransicht) dargestellt. An der Blende 39 ist der Beschlagteil 32 mit seiner Montageplatte 33 aufgesetzt und mittels Schrauben durch die Löcher 38 hindurch befestigt. Der Fuss 26 des Beschlagteils 19 ist mit der Schwalbenschwanznut 27 auf die Schwalbenschwanzleiste 34 des befestigten Beschlagteils 32 aufgeschoben. Der an dem Hals 24 sitzende verbreiterte Kopf 20 ist mit seinem vorderen Grat 22 gegen die Schrägflächen 15, 15' und den Einführungsschlitz 14 der Klemmbacken 8, 8' angesetzt und unter kräftigem Druck zwischen die beiden Klemmbacken 8, 8' eingeführt, wobei diese federnd nachgiebig nach aussen zurückweichen, so dass ihre nach innen gerichteten Vorsprünge 12, 12' von den Schrägflächen 21, 21' an der Vorderseite des Kopfes 20 federnd auseinander gedrückt werden, den Kopf hindurchgleiten lassen und sich hinter dem Kopf, nach dessen Durchführung wieder zusammenschliessen. Danach legen sich die Schrägflächen 13, 13' hinter den Vorsprüngen 12, 12' an den Enden Klemmbacken 8, 8' gegen die gleichgerichteten Schrägflächen 23, 23' an der Hinterseite des Kopfes 20 an, wie das in der Fig. 8 dargestellt ist. Es ist zu erkennen, dass vor und hinter den Schrägflächen 13, 23 bzw. 13', 23' zwischen den Klemmbacken 8, 8' und dem Kopf 20 bzw. den Verstärkungen 12, 12' der Klemmbakken und den Hals 24 noch Freiraum besteht, während die Blende 39 gegen die Vorderkante der äusseren Seitenwand 3 und andere hier nicht dargestellte Frontflächen vor der Vorderwand 1 der Schublade anliegt. Durch die auf die Schrägflächen 13, 23 bzw. 13' und 23' wirkende Klemmkraft der Klemmbacken 8, 8' sind diese bestrebt den Kopf 20 weiter in die Klammer 7 hineinzuziehen, so dass die Blende 39 fest gegen die Frontflächen des Schubes angezogen wird. In dieser Stellung kann die Blende 39 gegenüber dem Schub in ihrer Stellung verschoben und justiert werden. In senkrechter Richtung gleitet dabei der Kopf 20 zwischen den Klemmbacken 8, 8' der Klammer 7 senkrecht auf und ab; die Schiebeführung mit der Schwalbenschwanzleiste 34 in der Schwalbenschwanznut 27 erlaubt eine waagrechte Verstellung der Blende. Nachdem die erwünschte Einstellung der Blende 39 gegenüber der Schublade erreicht ist, wird mit der Schraube die in die Bohrung 17, 17' der Klammer eingesetzt ist mittels eines durch ein Loch 40 in der äusseren Seitenwand 3 durchgeführten Schraubendrehers durch Gegeneinanderziehen der beiden Klemmbacken 8, 8' der Klammer 7 bewirkt, dass der Kopf 20 des Beschlagteiles 19 beim Abgleiten der Schrägflächen 13, 23 sowie 13', 23' aufeinander noch weiter in die Klammer 7 hineingezogen wird. Dadurch wird nicht nur die Blende 39 gegen die Frontflächen des Schubes gegen die sie anliegt, noch stärker angepresst, sondern es wird auch in der Schiebeführung 32 die Schwalbenschwanznut 27 von der Schwalbenschwanzleiste 34 abgerückt, wobei sich auch hier die Schrägflächen 28, 35, 28', 35' gegeneinander verschieben und dabei eine Verklemmung bewirken, die ein weiteres Gleiten der Schrägflächen in Verstellrichtung verhindert.

Um bei diesem Verspannen der einzelnen Teile gegeneinander eine weitere Verschiebung in Einstellrichtung zu verhindern, sind die gegeneinander anliegenden Schrägflächen der einzelnen Führungen in der Klammer und in der Schiebeführung mit Linienrasterungen versehen, deren Linien quer zur Verstellrichtung verlaufen. Durch die Verklemmung mittels der als Sperrglied wirkenden Schraube verhaken sich die einander gegenüberliegenden Rasterungen auf den Schrägflächen gewissermassen formschlüssig ineinander, so dass eine weitere Verschiebung in Verstellrichtung nicht mehr möglich ist. Eine solche Verstellung ist erst wieder möglich, wenn die Schraube in dem Loch 17, 17' der Klammer 7 gelöst wird und die Blende 39 lediglich nur noch aufgrund der Federwirkung der Klammer 7 angezogen ist.

Es ist erkennbar, dass für den Fall indem eine Verstellung der Blende gegenüber dem Schub lediglich in einer Richtung als ausreichend erachtet wird, die Schiebeführung 26, 32 fortgelassen werden kann und der Kopf 20 mit dem Steg 24 dann mit seinem Fuss 26 unmittelbar auf der Rückseite der Blende 39 zu befestigen ist.

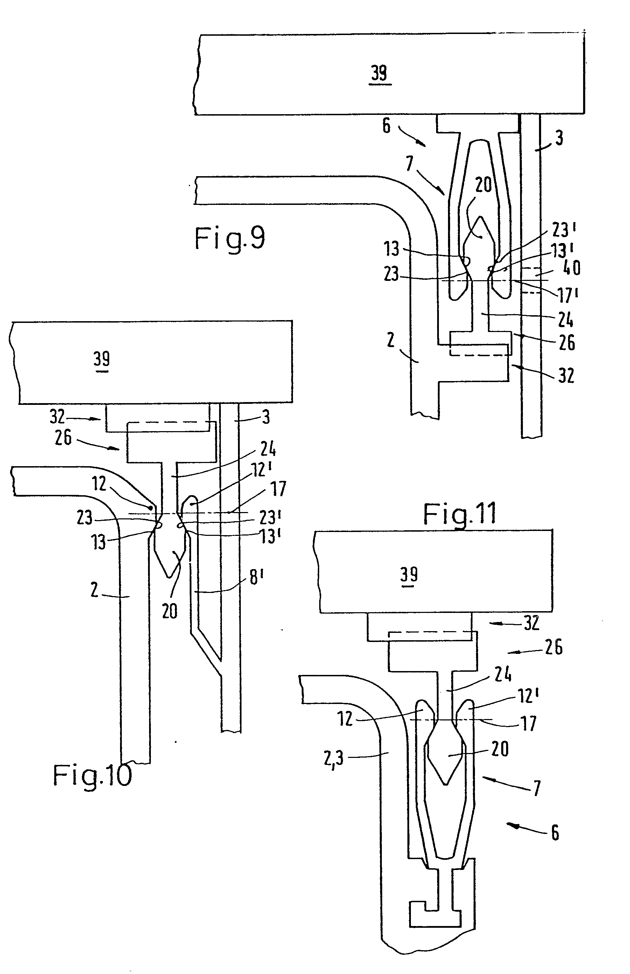

Bei dem Ausführungsbeispiel nach der Fig. 8 ist die Klammer 7 mit ihrem Einsatzfuss 11 in einer entsprechend gegenteilig ausgeformten Führung in dem Zwischenraum zwischen den Seitenwänden 2 und 3 eingesetzt. Bei einem anderen Ausführungsbeispiel entsprechend der Fig. 9 ist die Klammer 7 mit einfachen als Montageplatten ausgebildeten Fussteil an der Rückseite der Blende 39 befestigt, während der Kopf mit seinem Hals auf einem Fussteil 26 sitzt, das mit einem an die innere Seitenwand der Schublade angeformten Gegenteil die Schiebeführung entsprechend den Fig. 3 und 4 bildet. Bei dem Ausführungsbeispiel nach der Fig. 10 ist der Kopf mit seinem Steg 24 in gleicher Weise an der Hinterseite der Blende 39 befestigt, wie bei dem Ausführungsbeispiel nach der Fig. 8. Bei dem Ausführungsbeispiel nach der Fig. 10 ist jedoch die eine Klammerbacke 8 mit dem Vorsprung 12 in die Aussenfläche der inneren Seitenwand 2 integriert und damit feststehend, während die andere Klammerbacke 8' mit den Vorsprung 12' federnd an der Innenseite der äusseren Seitenwand 3 angeordnet ist. Nach einem wiederum anderen Ausführungsbeispiel entsprechend der Fig. 11 ist die Anordnung des Beschlages in gleicher Weise vorgenommen wie bei dem Ausführungsbeispiel nach der Fig. 8, jedoch hat der Schub nur eine einzige Seitenwand und die Halterung für die Klammer ist an der Aussenseite dieser Seitenwand 2 angeordnet.

Nach der Fig. 12 ist dargestellt, dass nicht unbedingt erforderlich ist, dass an den Vorsprüngen 12, 12' der Klammerbacken auf der Innenseite Schrägflächen 13, 13' ausgebildet sind. Es genügt vielmehr, dass diese Vorsprünge 12, 12' mit einem spitzen Winkel ausgebildet sind, wenn die Rückseiten des Kopfes 20 mit Schrägflächen 23, 23' versehen sind. Auch bei dieser Ausführung wird durch die elastische Klemmwirkung der Klammerbacken der Kopf in die Klammer hineingezogen und bei späterem Anziehen der als Sperrglied wirkenden Schraube die Einzugskraft vergrössert. In kinematischer Umkehrung können auch an den Vorsprüngen 12, 12' der Klammerbacken an deren Rückseite Schrägflächen 13, 13' ausgebildet sein, während an der Rückseite des Kopfes 20 lediglich ausgewölbte Flächen oder spitzwinkelige Grate vorhanden sind.

**Patentansprüche**

1. Ausziehbarer Möbelschub mit angebrachter Frontblende, die in der Ebene ihrer Haupterstreckungsrichtungen mindestens in einer Richtung einstellbar und feststellbar ist und mittels Verbindungsbeschlägen mit Hintergreifungsköpfen angebracht ist, gekennzeichnet durch einen Verbindungsbeschlag zwischen Frontblende und Schub, bestehend aus mindestens zwei im Abstand voneinander angeordneten Klammern (6), deren Backen (7) einen Einführungsschlitz (14) eingrenzen und mittels eines Sperrgliedes zusammenpressbar sind sowie den Klammern (6) gegenüberliegend angeordnete und darauf ausgerichtete Stege (24) mit einem verbreiterten Kopf (20), dessen Breite geringer ist als der grösste Abstand der Klammerbacken (7) voneinander bei eingesetztem Kopf, wobei zwischen dem Bereich der Klammerbacken (8, 8') unmittelbar hinter dem Einführungsschlitz (14) an den Köpfen (20) von dem Schlitz (14) hinweg auseinanderstrebende Schrägflächen (23, 23') angeordnet sind, die miteinander gegenüberliegenden Vorsprüngen an den Klammerbacken (7) zusammenwirken und wobei weiterhin zwischen dem Steg (24) und dem äusseren Ende (12, 12') der Klammerbacken einerseits und andererseits zwischen dem Kopf (20) und den zugeordneten, inneren Bereichen der Klammerbacken in zusammengesetztem Zustand noch ein Abstand vorhanden ist, wobei weiterhin der jeweils eine Beschlagteil neben dem Frontteil des Schubes bzw. ausserhalb seiner Vorderwand und der andere Beschlagteil gegenüberliegend auf der Rückseite der Blende (39) angebracht ist und wobei die Lage der Schrägflächen bzw. Vorsprünge an den Klammern bzw. Köpfen sowie ihr Abstand von der Blende derart aufeinander abgestimmt sind, dass bei in die Klammern eingesetzten Köpfen die Blende gegen die Vorderfläche des Möbelschubes anliegt.

2. Möbelschub nach Anspruch 1, dadurch gekennzeichnet, dass die Klammern hinter ihrer Vorderkante (16, 16') die Köpfe hintergreifende Kanten oder Schlägflächen (13, 13') aufweisen.

3. Möbelschub nach Anspruch 1, dadurch gekennzeichnet, dass sowohl an den Köpfen (20) als auch an den Klammern (6) in ihrer Schrägstellung aneinander angepasste Schrägflächen (23, 23' ; 13, 13') angeordnet sind.

4. Möbelschub nach einem der vorstehenden Ansprüche, dadurch gekennzeichnet, dass die Köpfe (20) an ihren Frontseiten mit keilförmigen Flächen (21, 21') versehen sind, deren Grat (22) parallel zum Einführungsschlitz (14) der Klammern (6) verläuft.

5. Möbelschub nach einem der vorstehenden Ansprüche, dadurch gekennzeichnet, dass die Klammerbacken (7) ausserhalb des Einführungsschlitzes (14) mit auseinander strebenden Flächen (15, 15') versehen sind.

6. Möbelschub nach Anspruch 1 und einem der vorstehenden Ansprüche, dadurch gekennzeichnet, dass der Steg (24), an dessen freiem Ende der Kopf (20) angeordnet ist, mit seiner Unterlage über eine rechtwinkelig zu den Klammerschlitzen (14) liegende Schiebeführung (26, 32) verbunden ist.

7. Möbelschub nach Anspruch 6, dadurch gekennzeichnet, dass die Schiebeführung (26, 32) eine Schwalbenschwanzführung mit einander hintergreifenden Schrägflächen (28, 28' ; 35, 35') ist.

8. Möbelschub nach einem der vorstehenden Ansprüche, dadurch gekennzeichnet, dass die Klammer (6) oder der Kopf (20) mit Steg (24) an der Seitenwand (2, 3) des Schubes befestigt ist.

9. Möbelschub nach Anspruch 1, dadurch gekennzeichnet, dass mindestens eine der Klammerbacken (7) an eine Seitenwand (20.3) des Schubes angeformt ist.

10. Möbelschub nach Anspruch 1, dadurch gekennzeichnet, dass die Klammer (6) oder der Kopf (20) mit Steg (24) in dem Zwischenraum zwischen doppelten Seitenwänden (2, 3) des Schubes angeordnet ist.

11. Möbelschub nach Anspruch 1 und einem der vorstehenden Ansprüche, dadurch gekennzeichnet, dass die Klammer (6) oder der Kopf (20) mit Steg (24) unter dem Boden (4) des Schubes angeordnet sind.

12. Möbelschub nach Anspruch 1, dadurch gekennzeichnet, dass das Sperrglied zum Zusammenpressen der Klammer (6) aus einer vorzugsweise im Bereich nahe des Klammerschlitzes (14), quer durch die Klammer hindurchgeführten Spannschraube (17) besteht.

13. Möbelschub nach Anspruch 12, dadurch gekennzeichnet, dass der Steg (24) und der Kopf (20) etwa mittig unterteilt sind und in diesem Unterteilungseinschnitt (25) die Spannschraube (17) in der Klammer (6) angeordnet ist.

14. Möbelschub nach Anspruch 1 und einem der vorstehenden Ansprüche, dadurch gekennzeichnet, dass die gegeneinander liegenden Teile (13, 13' ; 23, 23') von Kopf (20) und Klammer (6) mit einer Linienrasterung versehen sind, die rechtwinkelig zum Einführungsschlitz (14) der Klammer verläuft.

15. Möbelschub nach Anspruch 1 und einem der vorstehenden Ansprüche, dadurch gekennzeichnet, dass die gegeneinander liegenden Teile der Schiebeführung (26, 32) mit einer Linienrasterung versehen sind, die rechtwinkelig zur Haupterstreckungsrichtung der Schiebeführung verläuft.

16. Möbelschub nach Anspruch 1 und einem der vorstehenden Ansprüche, dadurch gekennzeichnet, dass in der Klammer (6) ein Endanschlag zur Begrenzung der Verschiebebewegung des eingesetzten Kopfes (20) angeordnet ist.

17. Möbelschub nach Anspruch 1 und Anspruch 6 oder 7, dadurch gekennzeichnet, dass an der Schiebeführung (26, 32) ein Endanschlag zur Begrenzung der Verschiebebewegung angeordnet ist.

**Revendications**

1. Tiroir de meuble à parement antérieur rapporté qui peut être réglé et fixé, au moins dans un sens, dans le plan de ses directions d'étendue principale et qui est monté à l'aide de garnitures de liaison comportant des têtes d'accrochage, caractérisé par la présence d'une garniture de liaison entre le parement antérieur et le tiroir, qui est constituée d'au moins deux pinces (6) montées à une certaine distance l'une de l'autre, dont les mâchoires (7) délimitent une fente d'introduction (14) et peuvent être pressées l'une vers l'autre au moyen d'un organe de blocage, ainsi que de tiges (24) à tête plus large (20) qui sont opposées aux pinces (6) et orientées vers celles-ci, dont la largeur est inférieure à la plus grande distance entre les mâchoires (7) d'une pince lorsque la tête est insérée, étant entendu que les têtes (20) présentent, dans le domaine délimité par les mâchoires de pinces (8, 8'), immédiatement derrière la fente d'introduction (14), des surfaces obliques (23, 23') s'écartant l'une de l'autre à partir de la fente (14), qui coopèrent avec des saillies opposées des mâchoires (7) de pinces et qu'en outre, une certaine distance subsiste entre la tige (24) et l'extrémité externe (12, 12') des mâchoires de pinces, d'une part, et entre la tête (20) et les zones internes des mâchoires de pinces qui y sont associées dans l'état monté, et étant entendu qu'en outre, chaque fois une partie de garniture est prévue à côté de la partie antérieure du tiroir ou à l'extérieur de sa paroi antérieure et l'autre est prévue en face, sur la paroi postérieure du parement (39), et que la position des surfaces obliques et des saillies prévues respectivement sur les pinces et les têtes, de même que la distance qui les sépare du parement sont mutuellement accordées d'une façon telle que, lorsque les têtes sont insérées dans les pinces, le parement soit appliqué contre la face antérieure du tiroir.

2. Tiroir de meuble suivant la revendication 1, caractérisé en ce que les pinces présentent, derrière leur côté antérieur (16, 16'), des bords ou des surfaces obliques (13, 13') accrochant les têtes.

3. Tiroir de meuble suivant la revendication 1, caractérisé en ce que des surfaces obliques (23, 23'; 13, 13'), dont les obliquités sont mutuellement adaptées, sont prévues aussi bien sur les têtes (20) que les pinces (6).

4. Tiroir de meuble suivant l'une quelconque des revendications précédentes, caractérisé en ce qu'au niveau de leur côté antérieur, les têtes (20) sont pourvues de surfaces cunéiformes (21, 21') dont l'arête (22) s'étend parallèlement à la fente d'introduction des pinces (6).

5. Tiroir de meuble suivant l'une quelconque des revendications précédentes, caractérisé en ce qu'en dehors de la fente d'introduction (14), les mâchoires (7) de pinces sont pourvues de surfaces (15, 15') qui s'écartent l'une de l'autre.

6. Tiroir de meuble suivant la revendication 1 et l'une quelconque des revendications précédentes, caractérisé en ce que la tige (24) à l'extrémité libre de laquelle est prévue la tête (20) est reliée à sa base par l'intermédiaire d'un dispositif de guidage à coulissement (26, 32) perpendiculaire aux fentes (14) des pinces.

7. Tiroir de meuble suivant la revendication 6, caractérisé en ce que le dispositif de guidage à coulissement (26, 32) est un dispositif de guidage à queue-d'aronde présentant des surfaces obliques (28, 28'; 35, 35') à accrochage mutuel.

8. Tiroir de meuble suivant l'une quelconque des revendications précédentes, caractérisé en ce que la pince (6) ou la tête (20) à tige (24) est fixée à la paroi latérale (2, 3) du tiroir.

9. Tiroir de meuble suivant la revendication 1, caractérisé en ce qu'au moins une des mâchoires (7) d'une pince est venue d'une pièce avec une paroi latérale (2, 3) du tiroir.

10. Tiroir de meuble suivant la revendication 1, caractérisé en ce que la pince (6) ou la tête (20) à tige (24) est prévue dans l'espace compris entre des parois latérales doubles (2, 3) du tiroir.

11. Tiroir de meuble suivant la revendication 1 et l'une quelconque des revendications précédentes, caractérisé en ce que la pince (6) ou la tête (20) à tige (24) est prevué sous le fond (4) du tiroir.

12. Tiroir de meuble suivant la revendication 1, caractérisé en ce que l'organe de blocage destiné à serrer les pinces (6) est constitué d'une vis de serrage (17) passant, de préférence dans la zone voisine de la fente (14) des pinces, transversalement à travers les pinces.

13. Tiroir de meuble suivant la revendication 12, caractérisé en ce que la tige (24) et la tête (20) sont divisées à peu près au milieu, la vis de serrage (17) étant disposée dans les pinces (6), dans cette découpe de division (25).

14. Tiroir de meuble suivant la revendication 1 et l'une quelconque des revendications précédentes, caractérisé en ce que les parties juxtaposées (13, 13'; 23, 23') de la tête (20) et de la pince (6) sont pourvues de stries linéaires qui s'étendent perpendiculairement à la fente d'introduction (14) de la pince.

15. Tiroir de meuble suivant la revendication 1 et l'une quelconque des revendications précédentes, caractérisé en ce que les parties juxtaposées du dispositif de guidage à coulissement (26, 32) sont pourvues de stries linéaires qui sont perpendiculaires à la direction d'étendue principale du dispositif de guidage à coulissement.

16. Tiroir de meuble suivant la revendication 1 et l'une quelconque des revendications précédentes, caractérisé en ce qu'une butée d'extrémité est prévue dans la pince (6) pour limiter le mouvement de coulissement de la tête (20) insérée.

17. Tiroir de meuble suivant la revendication 1 et la revendication 6 ou 7, caractérisé en ce qu'une butée d'extrémité est prévue sur le dispositif de guidage à coulissement (26, 32) pour limiter le mouvement de coulissement.

## Claims

1. A pull-out furniture drawer with an attached front facing panel which is adjustable and fixable in the plane of its main extension directions, in at least one direction, and is attached by means of connecting fittings with interlocking heads, characterised by a connecting fitting between front facing panel and drawer consisting of at least two mutually spaced clips (6) whose jaws (7) define an inlet slot (14) and can be pressed together by means of a locking member as well as webs (24) with a widened head (20) which face the clips (6) and are aligned with them, the width of the head being smaller than the greatest distance between the clip jaws (7) once the head is inserted, wherein oblique faces (23, 23') which diverge from the slot (14) are arranged between the region of the clip jaws (8, 8') directly behind the inlet slot (14) on the heads (20) and the mutually opposed projections on the clip jaws (7) cooperate and wherein an additional distance is also provided between the web (24) and the outer end (12, 12') of the clip jaws on the one hand and, on the other hand, between the head (20) and the associated internal regions of the clip jaws in the assembled state, wherein one respective fitting part is also arranged adjacent to the front part of the drawer or outside its front wall and the other fitting part is attached in opposing manner on the rear of the facing panel (39) and wherein the position of the oblique faces or projections on the clips ort heads as well as the distance thereof from the facing panel are adapted to one another in such a way that, when the heads are inserted into the clips, the facing panel rests against the front face of the furniture drawer.

2. A furniture drawer according to claim 1, characterised in that the clips have edges or oblique faces (13, 13') behind their front edge (16, 16') which grip behind the heads.

3. A furniture drawer according to claim 1, characterised in that oblique faces (23, 23'; 13, 13') which are adapted to one another in their oblique position are arranged on the heads (20) as well as on the clips (6).

4. A furniture drawer according to one of the preceding claims, characterised in that the heads (20) are provided at their front ends with wedge-shaped faces (21, 21'), the ridge (22) of which runs parallel to the inlet slot (14) of the clips. (6).

5. A furniture drawer according to one of the preceding claims, characterised in that the clip jaws (7) are provided outside the inlet slot (14) with divergent faces (15, 15').

6. A furniture drawer according to claim 1 and one of the preceding claims, characterised in that the web (24), on whose free end the head (20) is arranged, is connected to its support by means of a sliding guide means (26, 32) lying at right angles to the clip slots (14).

7. A furniture drawer according to claim 6, characterised in that the sliding guide means (26, 32) is a dovetail guide means with interlocking oblique faces (28, 28'; 35, 35').

8. A furniture drawer according to one of the preceding claims, characterised in that the clip (6) or the head (20) with web (24) is fixed on the side wall (2, 3) of the drawer.

9. A furniture drawer according to claim 1, characterised in that at least one of the clip jaws (7) is shaped on a side wall (20.3) of the drawer.

10. A furniture drawer according to claim 1, characterised in that the clip (6) or the head (20) with the web (24) is arranged in the space between double side walls (2, 3) of the drawer.

11. A furniture drawer according to claim 1 and one of the preceding claims, characterised in that the clip (6) or head (2) with web (24) are arranged beneath the base (4) of the drawer.

12. A furniture drawer according to claim 1, characterised in that the locking member for pressing together the clip (6) consists of a straining screw (17) guided transversely through the clip, preferably in the region close to the clip slot (14).

13. A furniture drawer according to claim 12, characterised in that the web (24) and the head (20) are divided approximately centrally ant the straining screw (17) is arranged in the clip (6) in this dividing recess (25).

14. A furniture drawer according to claim 1 and one of the preceding claims, characterised in that the opposing parts (13, 13'; 23, 23') of head (20) and clip (6) are provided with a linear grid which runs at right angles to the inlet slot (14) of the clip.

15. A furniture drawer according to claim 1 and one of the preceding claims , characterised in that the opposing parts of the sliding guide means (26, 32) are provided with a linear grid which runs at right angles to the main extension direction of the sliding guide means.

16. A furniture drawer according to claim 1 and one of the preceding claims, characterised in that an end stop for limiting the displacement of the inserted head (20) is arranged in the clip (6).

17. A furniture drawer according to claim 1 and claim 6 or 7, characterised in that an end stop for limiting the displacement is arranged on the sliding guide means (26, 32).

Fig.1

Fig.2

Fig.3

Fig.4

Fig.5

Fig.6

Fig.7

Fig. 8

Fig. 13

Fig. 12

Fig.9

Fig.10

Fig.11